# EUROPEAN PATENT APPLICATION

(11) **EP 4 696 447 A1**
(43) Date of publication of application: **18.02.2026**
(21) Application number: 25180675.8
(22) Date of filing: 04.06.2025
(51) Int. Cl.: B23K 26/00, H01M 10/04, H01M 50/528, H01M 50/531, H01M 50/536

(54) **BATTERY CELL, MANUFACTURING APPARATUS OF BATTERY CELL AND MANUFACTURING METHOD OF BATTERY CELL**

(30) Priority: 14.08.2024 KR 20240109268; 10.10.2024 KR 20240137888
(71) Applicant: SK On Co., Ltd., Seoul 03161 (KR)
(72) Inventor: JEONG, Taek Eon, Daejeon 34124 (KR); KIM, Min Gyu, Daejeon 34124 (KR); SEO, Gi Jeong, Daejeon 34124 (KR)
(74) Representative: Prüfer & Partner mbB Patentanwälte · Rechtsanwälte

(57) **Abstract**

A battery cell includes: a case including an accommodation space; a cap plate connected to the case and including a first terminal and a second terminal; and an electrode assembling body assembly disposed in the accommodation space and connected to the first terminal and the second terminal, and the electrode assembling body assembly includes: at least one electrode assembly; a first current collecting member that includes a first open region in which at least one cathode non-coated region to which an active material is not applied is drawn out from the at least one cathode plate, and that is connected to the first terminal; and a second current collecting member including a second open region in which at least one anode non-coated region to which the active material is not applied is drawn out from the at least one anode plate and that is connected to the second terminal.

## Description

### TECHNICAL FIELD

The present disclosure relates to a battery cell, a manufacturing apparatus of the battery cell and a manufacturing method of the battery cell.

### BACKGROUND

Batteries are widely used in small electronic devices such as mobile phones and laptop computers, as well as medium and large mechanical devices such as electric vehicles (EV) and energy storage devices, and have the advantage of being rechargeable and reusable.

An electrode assembly including a cathode plate and an anode plate may be stored in a case selected according to the purpose of use, such as a pouch type, square type, or cylindrical type, and an electrolyte may be injected to manufacture a battery cell.

A battery cell may have terminals or lead tabs exposed to the outside of the case. The terminals or lead tabs may be electrically connected to the cathode plate and the anode plate.

A structure may be disposed inside the case to connect the cathode plate and the anode plate to the terminals or lead tabs, respectively.

### SUMMARY

According to an aspect of the present disclosure, a battery cell, a manufacturing apparatus of the battery cell having improved quality and improved manufacturing efficiency, and a manufacturing method of the battery cell are provided.

Additionally, the present disclosure may be widely applied to devices within green technology fields such as solar power generation and wind power generation.

Additionally, the present disclosure may be applied to eco-friendly devices such as eco-friendly electric vehicles and hybrid vehicles for ameliorating the effects of a climate change by suppressing air pollution and greenhouse gas emissions.

A battery cell according to a preferred embodiment of the present disclosure may include: a case including an accommodation space; a cap plate connected to the case and including a first terminal and a second terminal; and an electrode assembling body assembly disposed in the accommodation space and connected to the first terminal and the second terminal; and the electrode assembling body assembly may include: at least one electrode assembly including at least one anode plate and at least one cathode plate; a first current collecting member that includes a first open region in which at least one cathode non-coated region to which an active material is not applied is drawn out from the at least one cathode plate, and that is connected to the first terminal; and a second current collecting member including a second open region in which at least one anode non-coated region to which the active material is not applied is drawn out from the at least one anode plate and that is connected to the second terminal, and the at least one cathode non-coated region may be bent and may be in contact with the first current collecting member, and the at least one anode non-coated region may be bent and may be in contact with the second current collecting member.

In a preferred embodiment, the at least one electrode assembly may include a plurality of electrode assemblies, the first current collecting member may include a plurality of first open regions, and the second current collecting member may include a plurality of second open regions.

In a preferred embodiment, the cathode non-coated regions of the plurality of electrode assemblies may be drawn out to the plurality of first open regions, and the anode non-coated regions of the plurality of electrode assemblies may be drawn out to the plurality of second open regions.

In a preferred embodiment, the plurality of electrode assemblies may be stacked in the same direction as a stacking direction in which the at least one anode plate and the at least one cathode plate are stacked, the plurality of first open regions may be disposed to be offset from each other in the stacking direction, and the plurality of second open regions may be disposed to be offset from each other in the stacking direction.

In a preferred embodiment, the at least one electrode assembly may include a plurality of electrode assemblies, each of the plurality of electrode assemblies may include a plurality of cathode plates and a plurality of anode plates, and a plurality of cathode non-coated regions may overlap each other and may be connected to the first current collecting member, and a plurality of anode non-coated regions may overlap each other and may be connected to the second current collecting member.

In a preferred embodiment, ends of the plurality of cathode non-coated regions and ends of the plurality of anode non-coated regions may be bent in a direction oriented toward the first current collecting member and the second current collecting member, and the ends of the plurality of cathode non-coated regions and the ends of the plurality of anode non-coated regions may extend in a direction that is parallel to a direction in which the plurality of cathode plates and the plurality of anode plates are stacked.

In a preferred embodiment, the first open region may be a notch or a hole, and the second open region may be a notch or a hole.

In a preferred embodiment, the at least one cathode non-coated region may be welded to the first current collecting member, the at least one anode non-coated region may be welded to the second current collecting member, and a welding line formed in the at least one cathode non-coated region and a welding line formed in the at least one anode non-coated region may be parallel to a direction in which the at least one anode plate and the at least one cathode plate are stacked.

In a preferred embodiment, a plurality of cathode non-coated regions drawn out to one first open region and a plurality of cathode non-coated regions drawn out to another first open region may be bent in different directions, and a plurality of anode non-coated regions drawn out to one second open region and a plurality of anode non-coated regions drawn out to another second open region may be bent in different directions.

In a preferred embodiment, the first open region and the second open region may be disposed so that a long side in a cross-section of the at least one anode plate or the at least one cathode plate in a thickness direction is disposed to be perpendicular to a straight line extending parallel to a stacking direction of the at least one anode plate and the at least one cathode plate.

In a preferred embodiment, the first open region and the second open region may be provided so that an outer line of the at least one anode plate or the at least one cathode plate includes a plurality of straight lines.

Meanwhile, in another aspect, the present disclosure provides a manufacturing apparatus of a battery cell.

A manufacturing apparatus of a battery cell of a preferred embodiment of the present disclosure may include an electrode assembling body assembly including at least one electrode assembly that includes at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate, and the manufacturing apparatus may include: a moving member moving the first current collecting member and the second current collecting member; a gripper member gripping the at least one cathode non-coated region and the at least one anode non-coated region; a mask member pressurizing and bending the at least one cathode non-coated region and the at least one anode non-coated region; and a welding member welding the at least one cathode non-coated region and the at least one anode non-coated region to the first current collecting member and the second current collecting member.

In a preferred embodiment, the gripper member may include: a first gripper arm facing one surface of the at least one cathode non-coated region and one surface of the at least one anode non-coated region; a second gripper arm spaced apart from the first gripper arm in a thickness direction of the at least one cathode non-coated region; and a gap adjustment actuator connected to the first gripper arm and the second gripper arm and moving at least one of the first gripper arm or the second gripper arm.

In a preferred embodiment, the welding member may weld in a moving direction of the mask member.

In a preferred embodiment, the welding member may provide a welding heat source in a position that does not overlap the first open region and the second open region.

Meanwhile, in another aspect, the present disclosure provides a manufacturing method of a battery cell.

A manufacturing method of a battery cell according to a preferred embodiment of the present disclosure may include: a preparatory operation of preparing at least one electrode assembly that includes at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate; a withdrawal operation of withdrawing the at least one cathode non-coated region to the first open region and withdrawing the at least one anode non-coated region to the second open region; a bending operation of bending the at least one cathode non-coated region and bending the at least one anode non-coated region; and a welding operation of welding at least one cathode non-coated region to the first current collecting member and welding at least one anode non-coated region to the second current collecting member.

In a preferred embodiment, in the bending operation, an end of the at least one cathode non-coated region may be bent in a direction oriented toward the first current collecting member and an end of the at least one anode non-coated region may be bent in a direction oriented toward the second current collecting member.

In a preferred embodiment, in the welding operation, laser welding may be performed.

In a preferred embodiment, in the bending operation, the at least one cathode non-coated region and the at least one anode non-coated region may be rotated about an axis, perpendicular to a thickness direction of the at least one anode plate and a thickness direction of the at least one cathode plate, as a rotation axis, so that the at least one cathode non-coated region and the at least one anode non-coated region are bent.

In a preferred embodiment, in the welding operation, welding may be performed in a direction that is parallel to a thickness direction of the at least one anode plate and a thickness direction of the at least one cathode plate.

According to an aspect of the present disclosure, a battery cell having improved quality and improved manufacturing efficiency, a manufacturing apparatus of the battery cell, and a manufacturing method of the battery cell may be provided.

Additionally, the present disclosure may be widely applied to devices within green technology fields such as solar power generation and wind power generation.

Additionally, the present disclosure may be applied to eco-friendly devices such as eco-friendly electric vehicles and hybrid vehicles for ameliorating the effects of a climate change by suppressing air pollution and greenhouse gas emissions.

### BRIEF DESCRIPTION OF DRAWINGS

Certain aspects, features, and advantages of the present disclosure are illustrated by the following detailed description with reference to the accompanying drawings.
FIG. 1 is a schematic exploded perspective view of a battery cell based on a preferred embodiment of the present disclosure.
FIG. 2 is a schematic exploded perspective view of an electrode assembly based on a preferred embodiment of the present disclosure.
FIG. 3 is a schematic exploded perspective view of a battery cell based on another preferred embodiment of the present disclosure.
FIG. 4 is a schematic exploded perspective view of an electrode assembly based on another preferred embodiment of the present disclosure.
FIG. 5 is a schematic exploded perspective view of a battery cell based on another preferred embodiment of the present disclosure.
FIG. 6 is a schematic exploded perspective view of an electrode assembly based on another preferred embodiment of the present disclosure.
FIG. 7 schematically illustrates a connection state of a current collecting member and an electrode assembly based on another preferred embodiment of the present disclosure.
FIG. 8 schematically illustrates a connection state of a current collecting member and an electrode assembly based on another preferred embodiment of the present disclosure.
FIG. 9 schematically illustrates a connection state of a current collecting member and an electrode assembly based on another preferred embodiment of the present disclosure.
FIG. 10 is a schematic diagram of a manufacturing apparatus of a battery cell based on a preferred embodiment of the present disclosure.
FIG. 11 is a schematic diagram of an operating state of a gripper member based on a preferred embodiment of the present disclosure.
FIG. 12 is a schematic diagram of a manufacturing apparatus of a battery cell based on another preferred embodiment of the present disclosure.
FIG. 13 is a schematic diagram of an operating state of a manufacturing apparatus of a battery cell of FIG. 12.
FIG. 14 is a schematic diagram of an operating state of a manufacturing apparatus of a battery cell of FIGS. 12 and 13.
FIG. 15 is a schematic diagram of an operating state of a manufacturing apparatus of a battery cell of FIGS. 12 to 14.
FIG. 16 is a schematic diagram of a manufacturing apparatus of a battery cell based on a preferred embodiment of the present disclosure.

### DETAILED DESCRIPTION

In order to help understand the description of a preferred embodiment of the present disclosure, elements described with the same symbol in the attached drawings are the same elements. Some components of the attached drawings are exaggerated, omitted, or schematically illustrated, and sizes of each component does not completely reflect actual sizes.

Additionally, in order to clarify the gist of the present disclosure, descriptions of elements and techniques well known by conventional techniques will be omitted, and hereinafter, the present disclosure will be described in detail with reference to the attached drawings.

Hereinafter, an X-axis illustrated in the drawing is a width direction of a battery cell 100, a Y-axis is a thickness direction of the battery cell 100, and a Z-axis is a height direction of the battery cell 100. However, these are directions arbitrarily set for convenience of understanding, and the directions may be changed.

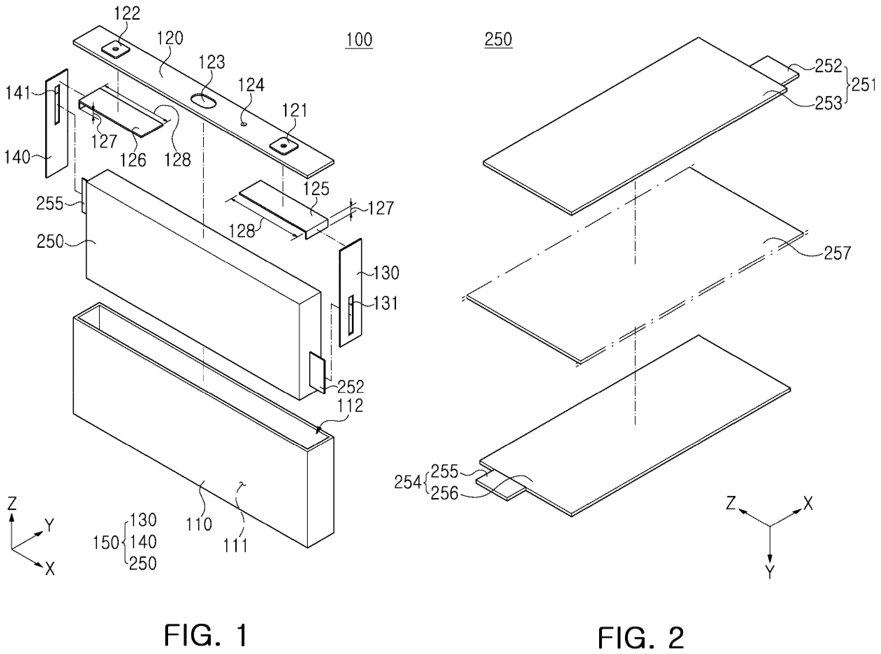

FIG. 1 is a schematic exploded perspective view of a battery cell 100 based on a preferred embodiment of the present disclosure, and FIG. 2 is a schematic exploded perspective view of an electrode assembly 250 based on a preferred embodiment of the present disclosure. FIG. 2 illustrates one cathode plate 251, one anode plate 254, and one separator 257.

As shown in FIGS. 1 and 2, a battery cell 100 according to a preferred embodiment of the present disclosure may include a case 110 including an accommodation space 111, a cap plate 120 connected to the case 110 and including a first terminal 121 and a second terminal 122, and an electrode assembling body assembly 150 disposed in the accommodation space 111 and connected to the first terminal 121 and the second terminal 122, and the electrode assembling body assembly 150 may include at least one electrode assembly 250 including at least one anode plate 254 and at least one cathode plate 251, a first current collecting member 130 that includes a first open region 131 in which at least one cathode non-coated region 252 to which an active material is not applied is drawn out from the at least one cathode plate 251 and which is connected to the first terminal 121, and a second current collecting member 140 including a second open region 141 in which at least one anode non-coated region 255 in which the active material is not applied is drawn out from the at least one anode plate 254 and that is connected to the second terminal 122. Additionally, the at least one cathode non-coated region 252 may be bent and may be in contact with the first current collecting member 130, and the at least one anode non-coated region 255 may be bent and may be in contact with the second current collecting member 140.

In a preferred embodiment, the battery cell 100 may be a lithium ion battery cell 100.

The case 110 may have various shapes such as a square shape, an oval shape including at least one curved portion at an edge, and a circle. For example, a shape of a cross-section (e.g., an X-Y plane) of the battery cell 100 of the case 110 in a thickness direction may be a polygon. Additionally, as an example, the shape of the cross-section (e.g., an X-Y plane) of the battery cell 100 of the case 110 in the thickness direction may be rectangular.

In a preferred embodiment, the case 110 may have a can shape and may be formed of a metal material including aluminum, an aluminum alloy and stainless steel, but the material is not necessarily limited by the present disclosure.

The case 110 may include an accommodation space 111. The case 110 may include a case opening region 112 formed by opening an end thereof in a +Z-direction. The accommodation space 111 and the case opening region 112 may be connected.

The electrode assembling body assembly 150 may be disposed in the accommodation space 111. The electrode assembling body assembly 150 may include at least one electrode assembly 250, the first current collecting member 130 and the second current collecting member 140.

The electrode assembly 250 may include at least one anode plate 254, at least one cathode plate 251, and at least one separator 257 interposed between the at least one anode plate 254 and the at least one cathode plate 251.

The electrode assembly 250 may be configured by interposing the separator 257 between the anode plate 254 and the cathode plate 251 to isolate the anode plate 254 and the cathode plate 251 by the separator 257.

Furthermore, in a preferred embodiment, the electrode assembly 250 may include a plurality of anode plates 254 and a plurality of cathode plates 251. In this case, the electrode assembly 250 may be manufactured by alternately stacking or arranging anode plates 254 and cathode plates 251 cut at a certain size on the separator 257 while continuously supplying the separator 257.

Additionally, in a preferred embodiment, the electrode assembly 250 may be manufactured by winding at least one anode plate 254 and at least one cathode plate 251. However, the method of manufacturing the electrode assembly 250 is not necessarily limited by the present disclosure.

The electrode assembly 250 may be accommodated in the accommodation space 111 of the case 110 together with an electrolyte. The accommodation space 111 of the case 110 may be covered by the cap plate 120, and the case 110 may be sealed by the cap plate 120.

In a preferred embodiment, the cathode plate 251 may include a cathode active material region 253 to which a cathode active material is applied and a cathode non-coated region 252 to which the cathode active material is not applied. The anode plate 254 may include an anode active material region 256 to which the anode active material is applied and an anode non-coated region 255 to which the anode active material is not applied.

The cathode active material may be provided in the form of a cathode mixture. For example, the cathode mixture may have a slurry form in which a cathode active material, a binder, a conductive agent, a dispersant, and the like, are mixed and stirred.

The anode active material may be provided in the form of an anode mixture. The anode mixture may have a slurry form in which an anode active material, a binder, a conductive agent, a dispersant, and the like, are mixed and stirred.

In a preferred embodiment, the cathode plate 251 may be formed of a material including aluminum, stainless steel, nickel, titanium, copper, or alloys thereof.

Additionally, in a preferred embodiment, the cathode plate 254 may be formed of a material including copper, gold, stainless steel, nickel, aluminum, titanium, or alloys thereof.

The cap plate 120 may include a first terminal 121, a second terminal 122, a venting region 123, and an electrolyte injection port 124. The electrolyte injection port 124 may be sealed by a sealing ball or the like after the electrolyte injection is completed.

The venting region 123 may be formed only by a cutting line formed on the cap plate 120. The cutting line may be formed by cutting or incising at least a partial region of the venting region 123 with a cutting blade. The venting region 123 may be formed to be broken by an increase in pressure in the accommodation space 111.

In a preferred embodiment, a separate insulating material may be provided in a contact region of the cap plate 120 and the case 110, and a separate insulating material may also be provided on an inner surface of the case 110, but is not necessarily limited by the present disclosure.

The first terminal 121 may be electrically connected to the first current collecting member 130, and the second terminal 122 may be electrically connected to the second current collecting member 140. An insulating material may be provided between the first terminal 121 and the cap plate 120, and an insulating material may also be provided between the second terminal 122 and the cap plate 120. The insulating material may be a material having electrical insulation properties.

The first current collecting member 130 and the second current collecting member 140 may be a material having electrical conductivity. The first current collecting member 130 may be connected to the first terminal 121 by a first terminal plate 125, and the second current collecting member 140 may be connected to the second terminal 122 by a second terminal plate 126.

The first current collecting member 130 and the second current collecting member 140 may be disposed on a side surface of the electrode assembly 250 or the case 110, and may face the cathode non-coated region 252 and the anode non-coated region 255, respectively. The first current collecting member 130 and the second current collecting member 140 may be perpendicular to the cap plate 120 or may be disposed to intersect the cap plate 120.

The first terminal plate 125 and the second terminal plate 126 may be formed of a material having electrically conductive properties. The first terminal plate 125 and the second terminal plate 126 may include a first extension portion 127 and a second extension portion 128, respectively.

The first extension portion 127 may face a side surface of the electrode assembly 250 or the case 110 and may face the first current collecting member 130 and the second current collecting member 140. The second extension portion 128 may be bent at the first extension portion 127, and may be disposed to be parallel to the cap plate 120. The first extension portion 127 and the second extension portion 128 may be perpendicular to or may intersect each other.

The first current collecting member 130 may include a first open region 131 formed on a side surface (e.g., a side surface, parallel to the Y-Z plane) that is parallel to the side surface of the electrode assembly 250 or the side surface of the case 110. The second current collecting member 140 may include a second open region 141 formed on a surface (e.g., the side surface parallel to the Y-Z plane), parallel to the side surface of the electrode assembly 250 or the side surface of the case 110. The first open region 131 and the second open region 141 may be parallel to each other.

The cathode non-coated region 252 of the cathode plate 251 may pass through the first open region 131, and the anode non-coated region 255 of the anode plate 254 may pass through the second open region 141.

The cathode non-coated region 252 may be bent after passing through the first open region 131, and then an end thereof may be brought into contact with the first current collecting member 130. Additionally, the anode non-coated region 255 may be bent after passing through the second open region 141, and then an end thereof may be brought into contact with the second current collecting member 140.

In a preferred embodiment, the cathode non-coated region 252 may be drawn out in an +X-direction from the electrode assembly 250, and the anode non-coated region 255 may be drawn out in an -X-direction from the electrode assembly 250. The cathode non-coated region 252 and the anode non-coated region 255 may be spaced apart from each other.

In a preferred embodiment, the electrode assembly 250 may be a bidirectional electrode assembly 250. The bidirectional electrode assembly 250 may have different directions in which the cathode non-coated region 252 is drawn out from the cathode plate 251 and the anode non-coated region 255 is drawn out from the anode plate 254. That is, in the electrode assembly 250, when the cathode plate 251 and the anode plate 254 may be stacked in a thickness direction of the cathode plate 251 or a thickness direction of the anode plate 254, the cathode non-coated region 252 and the anode non-coated region 255 are stacked to be offset from each other.

According to the bidirectional electrode assembly 250, when the battery cell 100 is charged with or discharged of electricity, the cathode active material and the anode active material may be uniformly utilized, and the heat generation of the battery cell 100 may be minimized.

According to the first current collecting member 130 and the second current collecting member 140, the bidirectional electrode assembly 250 may be electrically connected to the first terminal 121 and the second terminal 122. According to the first current collecting member 130 and the second current collecting member 140, the electrode assembly 250 and the first terminal 121 and the second terminal 122 may be connected while preventing an unnecessary volume increase of the battery cell 100. Accordingly, the quality of the battery cell 100 may be improved, and the manufacturing efficiency may be improved.

Meanwhile, the electrode assembly 250 illustrated in FIG. 2 may have a form in which the cathode plate 251 and the anode plate 254 are formed to be relatively long in a longitudinal direction (e.g., X-direction) of the cathode plate 251 and the anode plate 254 and are wound (or reeled), or may have a form in which the cathode plate 251 and the anode plate 254 are stacked in a thickness direction (e.g., Y-direction). However, whether the electrode assembly 250 is wound or stacked is not necessarily limited by the present disclosure.

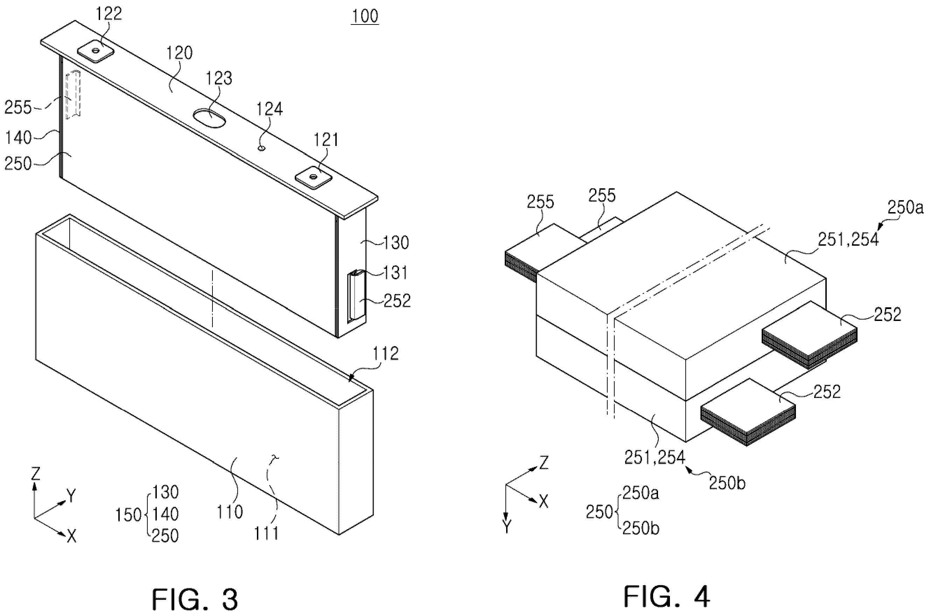

FIG. 3 is a schematic exploded perspective view of a battery cell 100 based on another preferred embodiment of the present disclosure, and FIG. 4 is a schematic perspective view of an electrode assembly 250 based on another preferred embodiment of the present disclosure. FIG. 4 illustrates an electrode assembly 250 having a plurality of cathode plates 251 and a plurality of anode plates 254.

As shown in FIGS. 3 and 4, in a preferred embodiment of the present disclosure, the electrode assembly 250 may include a plurality of cathode plates 251 and a plurality of anode plates 254. In this case, a separator 257 may be disposed between one cathode plate 251 and one anode plate 254.

In a preferred embodiment, the plurality of anode plates 254 and the plurality of cathode plates 251 may be stacked in a thickness direction (e.g., Y-direction) of the battery cell 100 or a thickness direction (e.g., Y-direction) of the case 110. In this case, the separator 257 may be disposed between the anode plate 254 and the cathode plate 251.

In a case in which the electrode assembly 250 is a winding type, the plurality of anode plates 254 and the plurality of cathode plates 251 may be wound and stored in a case 110, and the cathode plates 251 and the anode plates 254 may be stacked in a cross-section (e.g., the X-Y plane) in a thickness direction of a battery cell 100. In this case, the separator 257 may be disposed between the anode plates 254 and the cathode plates 251.

A plurality of cathode non-coated regions 252 may be bent in a direction oriented toward the first current collecting member 130 after passing through the first open region 131 and may be in contact with the first current collecting member 130.

A plurality of anode non-coated regions 255 may also be bent in a direction oriented toward the second current collecting member 140 after passing through the second open region 141 and may be in contact with the second current collecting member 140.

For example, the cathode non-coated region 252 and the anode non-coated region 255 may be welded to the first current collecting member 130 and the second current collecting member 140, respectively.

Accordingly, a process of welding the plurality of cathode non-coated regions 252 may be omitted, and a process of welding the plurality of anode non-coated regions 255 may be omitted. For example, the plurality of cathode non-coated regions 252 may not have an ultrasonic welded region, and the plurality of anode non-coated regions 255 may not have an ultrasonic welded region. Additionally, the battery cell 100 according to the present disclosure may not have a region in which the plurality of cathode non-coated regions 252 are pre-welded and a region in which the plurality of anode non-coated regions 255 are pre-welded.

The plurality of cathode non-coated regions 252 may be directly welded to the first current collecting member 130, and the plurality of anode non-coated regions 255 may be directly welded to the second current collecting member 140. Accordingly, the manufacturing efficiency of the battery cell 100 may be improved.

As shown in FIG. 4, in a preferred embodiment of the present disclosure, at least one electrode assembly 250 may include a plurality of electrode assemblies 250.

In a preferred embodiment, the plurality of electrode assemblies 250 may be stacked in the same direction as a stacking direction (e.g., Y-direction) in which at least one anode plate 254 and at least one cathode plate 251 are stacked.

In a preferred embodiment, the plurality of electrode assemblies 250 may include a first electrode assembly 250a and a second electrode assembly 250b. The first electrode assembly 250a and the second electrode assembly 250b may be stacked in the thickness direction (e.g., Y-direction) of the battery cell 100.

An outer surface of the first electrode assembly 250a may be surrounded by the separator 257, and an outer surface of the second electrode assembly 250b may also be surrounded by the separator 257. The separator 257 may be fixed with a tape or the like.

In the accommodation space 111 of the case 110, the first electrode assembly 250a and the second electrode assembly 250b may be stacked so that the separator 257 of the first electrode assembly 250a and the separator 257 of the second electrode assembly 250b are in contact.

For example, in the cross-section (e.g., the X-Z plane) of the battery cell 100 in a height direction, the plurality of cathode non-coated regions 252 of the first electrode assembly 250a and the plurality of cathode non-coated regions 252 of the second electrode assembly 250b may be drawn out to one edge of the first electrode assembly 250a and one edge of the second electrode assembly 250b.

Additionally, in the cross-section (e.g., the X-Z plane) of the battery cell 100 in the height-direction, the plurality of anode non-coated regions 255 of the first electrode assembly 250a and the plurality of anode non-coated regions 255 of the second electrode assembly 250b may be drawn out to the other edge of the first electrode assembly 250a and the other edge of the second electrode assembly 250b.

In this case, the plurality of cathode non-coated regions 252 of the first electrode assembly 250a and the plurality of anode non-coated regions 255 of the first electrode assembly 250a may be spaced apart from each other in a width direction (e.g., X-direction) of the battery cell 100, and the plurality of cathode non-coated regions 252 of the second electrode assembly 250b and the plurality of anode non-coated regions 255 of the second electrode assembly 250b may also be spaced apart from each other in the width direction (e.g., X-direction) of the battery cell 100.

Additionally, in a preferred embodiment, at one edge of the first electrode assembly 250a and one edge of the second electrode assembly 250b, the plurality of cathode non-coated regions 252 of the first electrode assembly 250a and the plurality of cathode non-coated regions 252 of the second electrode assembly 250b may be spaced apart from each other. For example, the plurality of cathode non-coated regions 252 of the first electrode assembly 250a and the plurality of cathode non-coated regions 252 of the second electrode assembly 250b may be spaced apart from each other in at least one of the thickness direction (e.g., Y-direction) of the electrode assembly 250 or the height direction (e.g., Z-direction) of the electrode assembly 250. This may be applied to the plurality of anode non-coated regions 255 of the first electrode assembly 250a and the plurality of anode non-coated regions 255 of the second electrode assembly 250b in the same principle.

When the plurality of electrode assemblies 250 are provided, the first current collecting member 130 may include a plurality of first open regions 131, and the second current collecting member 140 may include a plurality of second open regions 141. The number of the plurality of first open regions 131 and the number of the plurality of second open regions 141 may be the same as the number of electrode assemblies 250.

In a preferred embodiment, the plurality of first open regions 131 may be spaced apart from each other, and the plurality of second open regions 141 may also be spaced apart from each other. The plurality of first open regions 131 may be provided in positions facing the plurality of cathode non-coated regions 252 of the first electrode assembly 250a and the plurality of cathode non-coated regions 252 of the second electrode assembly 250b, and the plurality of second open regions 141 may be provided in positions facing the plurality of anode non-coated regions 255 of the first electrode assembly 250a and the plurality of anode non-coated regions 255 of the second electrode assembly 250b.

The plurality of cathode non-coated regions 252 may pass through the plurality of first open regions 131, and the plurality of anode non-coated regions 255 may pass through the plurality of second open regions 141.

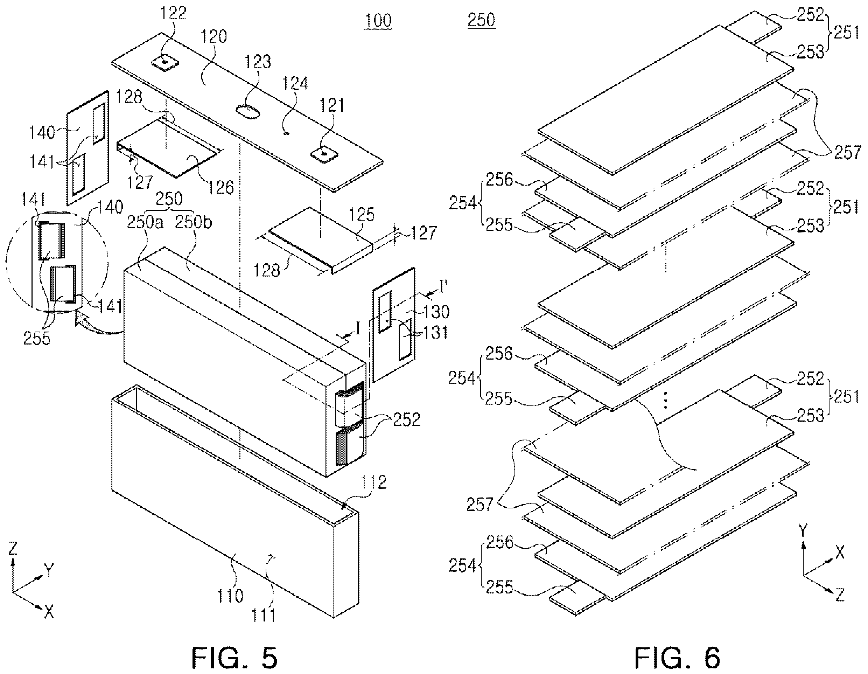

FIG. 5 is a schematic exploded perspective view of a battery cell 100 based on another preferred embodiment of the present disclosure.

As shown in FIG. 5, in a preferred embodiment of the present disclosure, a plurality of first open regions 131 may be formed in the first current collecting member 130, and a plurality of second open regions 141 may be formed in the second current collecting member 140.

In a preferred embodiment, the cathode non-coated regions 252 of the plurality of electrode assemblies 250 may be drawn out to the plurality of first open regions 131, and the anode non-coated regions 255 of the plurality of electrode assemblies 250 may be drawn out to the plurality of second open regions 141.

For example, the cathode non-coated region 252 of the first electrode assembly 250a may be bent after being drawn out to one of the first open regions 131. The bent cathode non-coated region 252 may be brought into contact with the first current collecting member 130.

The cathode non-coated region 252 of the second electrode assembly 250b may be bent after being drawn out to the other first open region 131. The bent cathode non-coated region 252 may be brought into contact with the first current collecting member 130.

Similarly, the anode non-coated region 255 of the first electrode assembly 250a may be bent after being drawn out to one of the second open regions 141. The bent anode non-coated region 255 may be brought into contact with the second current collecting member 140.

The anode non-coated region 255 of the second electrode assembly 250b may be bent after being drawn out to the other second open region 141. The bent anode non-coated region 255 may be brought into contact with the second current collecting member 140.

In a preferred embodiment, the plurality of first open regions 131 may be disposed to be offset from each other in at least one of a stacking direction of the plurality of electrode assemblies 250, a stacking direction of the cathode plates 251, or a stacking direction of the anode plates 254, and the plurality of second open regions 141 may also be disposed to be offset from each other in at least one of the stacking direction (e.g., Y-direction) of the plurality of electrode assemblies 250, the stacking direction of the cathode plates 251 or the stacking direction of the anode plates 254. For example, in one first current collector 130, one first open region 131 may be disposed to be offset from another first open region 131. Furthermore, in one second current collector 140, one second open region 141 may be disposed to be offset from another second open region 141. For example, being offset means that, in the first current collector 130, one first open region 131 includes a region that does not overlap another first open region 131. The same applies to the second open region 141.

For example, the plurality of first open regions 131 may be offset from each other or spaced apart from each other in at least one of the stacking direction (e.g., Y-direction) of the plurality of electrode assemblies 250 or the height direction (e.g., Z-direction) of the battery cell 100. Additionally, the plurality of second open regions 141 may be offset from each other or spaced apart from each other in at least one direction of the stacking direction (e.g., Y-direction) of the plurality of electrode assemblies 250 or the height direction (e.g., Z-direction) of the battery cell 100.

Additionally, the plurality of first open regions 131 may have different heights in a plane (e.g., a Y-Z plane) that is parallel to a side surface of the electrode assembly 250. For example, the plurality of first open regions 131 may be disposed in different heights in the Z-axis direction.

Additionally, in the plane (e.g., the Y-Z plane) that is parallel to the side surface of the electrode assembly 250, the plurality of first open regions 131 may be offset from each other in at least one direction of the thickness direction (e.g., Y-direction) of the battery cell 100, the stacking direction (e.g., Y-direction) of the electrode assembly 250, the stacking direction of the cathode plate 251, and the stacking direction of the anode plate 254. For example, the plurality of first open regions 131 may not be disposed on the same line in at least one of the Y-axis direction and the Z-axis direction.

Additionally, in a preferred embodiment, one of the plurality of first open regions 131 may face the plurality of cathode non-coated regions 252 of the first electrode assembly 250a, and another first open region 131 may face the plurality of cathode non-coated regions 252 of the second electrode assembly 250b.

The above-described matters may be applied to the plurality of second open regions 141 in the same principle. That is, one of the second open regions 141 of the plurality of second open regions 141 may face the plurality of anode non-coated regions 255 of the first electrode assembly 250a, and another second open region 141 may face the plurality of anode non-coated regions 255 of the second electrode assembly 250b.

Accordingly, the plurality of anode non-coated regions 255 and the plurality of cathode non-coated regions 252 may not be bent or twisted in the height direction (e.g., Z-direction) of the battery cell 100 or the height direction (e.g., Z-direction) of the electrode assembly 250, and may be bent only in one direction, so that the plurality of cathode plates 251 and the plurality of anode plates 254 may be connected to the first current collecting member 130 and the second current collecting member 140. Accordingly, the electrical stability of the battery cell 100 may be improved, and the quality may be improved.

Additionally, the plurality of second open regions 141 in a plane (e.g., the Y-Z plane) that is parallel to the side surface of the electrode assembly 250 may have different heights. For example, the plurality of second open regions 141 may be disposed at different heights in the Z-axis direction.

Additionally, the plurality of second open regions 141 in a plane (e.g., the Y-Z plane) that is parallel to the side surface of the electrode assembly 250 may be disposed to be offset from each other in at least one direction of the thickness direction of the battery cell 100, the stacking direction (e.g., Y-direction) of the electrode assembly 250, the stacking direction of the cathode plate 251 or the stacking direction of the anode plate 254. For example, the plurality of second open regions 141 may not be disposed on the same line in the Y-axis direction.

FIG. 6 is a schematic exploded perspective view of an electrode assembly 250 based on another preferred embodiment of the present disclosure.

As shown in FIGS. 5 and 6, in a preferred embodiment of the present disclosure, at least one electrode assembly 250 may include a plurality of electrode assemblies 250, and the plurality of electrode assemblies 250 may include a plurality of cathode plates 251 and a plurality of anode plates 254, respectively. Additionally, the plurality of cathode non-coated regions 252 may overlap each other and may be connected to the first current collecting member 130, and the plurality of anode non-coated regions 255 may overlap each other and may be connected to the second current collecting member 140.

First, as shown in FIG. 6, in a preferred embodiment of the present disclosure, one electrode assembly 250 may include a plurality of cathode plates 251 and a plurality of anode plates 254. In this case, a separator 257 may be disposed between the cathode plate 251 and the anode plate 254.

In one electrode assembly 250, the plurality of cathode non-coated regions 252 may overlap each other in the thickness direction (e.g., Y-direction) of the cathode plate 251 or the thickness direction (e.g., Y-direction) of the battery cell 100, and the plurality of cathode non-coated regions 252 may not overlap the plurality of anode non-coated regions 255 in the thickness direction (e.g., Y-direction) of the cathode plate 251 or the thickness direction (e.g., Y-direction) of the battery cell 100.

Additionally, in one electrode assembly 250, a plurality of anode non-coated regions 255 may overlap each other in the thickness direction (e.g., Y-direction) of the anode plate 254 or the thickness direction (e.g., Y-direction) of the battery cell 100, and the plurality of anode non-coated regions 255 may not overlap the plurality of cathode non-coated regions 252 in the thickness direction (e.g., Y-direction) of the cathode plate 251 or the thickness direction (e.g., Y-direction) of the battery cell 100. The plurality of cathode plates 251 and the plurality of anode plates 254 may be stacked according to the principle described above.

As shown in FIG. 5, the electrode assembly 250 in which the plurality of anode plates 254 and the plurality of cathode plates 251 are stacked may be provided in plural. The plurality of electrode assemblies 250 may include a first electrode assembly 250a and a second electrode assembly 250b. The first electrode assembly 250a and the second electrode assembly 250b may be connected to the first current collecting member 130 and the second current collecting member 140.

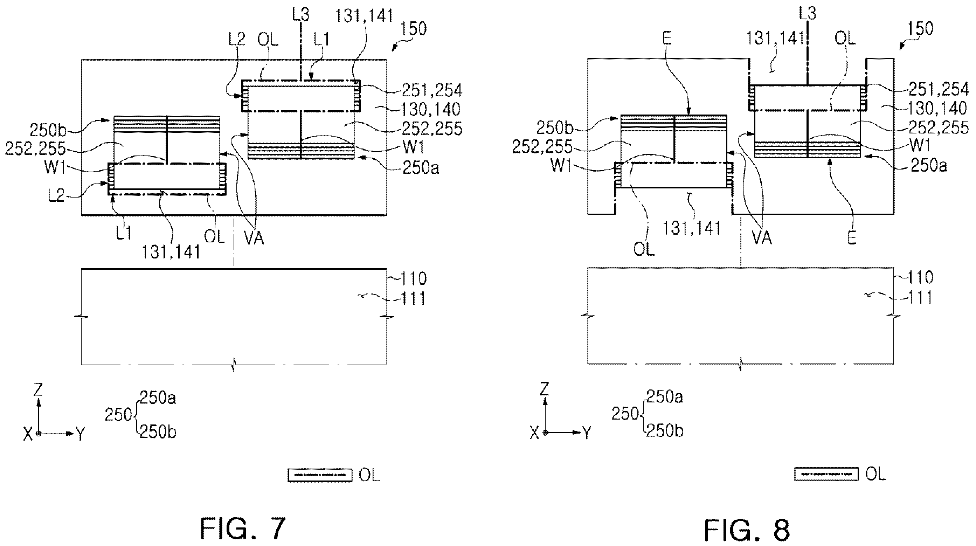

FIG. 7 schematically illustrates a connection state of the current collecting member and the electrode assembly 250 based on another preferred embodiment of the present disclosure.

First, in another preferred embodiment of the present disclosure, the cathode plate 251 and the anode plate 254 may be stacked in the accommodation space 111 of the case 110 so that relatively wide surfaces thereof are in contact with each other. Accordingly, in this case, width directions of the cathode plate 251 and the anode plate 254 may be parallel to the thickness direction (e.g., Y-direction) of the battery cell 100, i.e., a thickness direction of the case 110.

That is, the cathode plate 251 and the anode plate 254 may be stacked in the height direction (e.g., Z-direction) of the battery cell 100 or the height direction (e.g., Z-direction) of the case 110, and the plurality of electrode assemblies 250 may also be stacked in the height direction (e.g., Z-direction) of the battery cell 100 or the height direction (e.g., Z-direction) of the case 110. In this case, bent regions VA of the plurality of cathode non-coated regions 252 and bent regions VA of the plurality of anode non-coated regions 255 may be disposed to be parallel to or extend in the height direction (e.g., Z-direction) of the battery cell 100 or the height direction (e.g., Z-direction) of the case 110.

In the case of FIG. 7, the first current collecting member 130 and the second current collecting member 140 may be disposed so that a long width portion, which is a relatively wide region in the Y-direction, or a long side portion, which is a relatively long length in the Y-direction, is parallel to the thickness direction (e.g., Y-direction) of the battery cell 100 or the thickness direction of the case 110.

The current collecting members illustrated in FIG. 7 may be the first current collecting member 130 and the second current collecting member 140. The first current collecting member 130 may be provided with a first open region 131, and a plurality of cathode non-coated regions 252 may be connected to the first current collecting member 130. The second current collecting member 140 may be provided with a second open region 141, and a plurality of anode non-coated regions 255 may be connected to the second current collecting member 140.

For example, when the current collector member illustrated in FIG. 7 is the first current collector member 130, an open region may be the first open region 131, and a non-coated region may be the cathode non-coated region 252. On the contrary, when the current collector member is the second current collector member 140, an open region may be the second open region 141, and a non-coated region may be the anode non-coated region 255.

In a preferred embodiment, the first open region 131 may be a notch or a hole. Furthermore, the second open region 141 may be a notch or a hole.

In a preferred embodiment, the first open region 131 may be a notch, and the second open region 141 may be a hole or vice versa.

The shapes and forms of the first open region 131 and the second open region 141 may be identical to or different from each other. Additionally, the first open region 131 and the second open region 141 may be slot-shaped.

In a preferred embodiment of the present disclosure, the first open region 131 and the second open region 141 may be holes. The first open region 131 and the second open region 141 may be through-holes formed in the first current collecting member 130 and the second current collecting member 140.

Additionally, in a preferred embodiment, the first open region 131 and the second open region 141 may be disposed so that in a cross-section (e.g., the Y-Z plane) of the anode plate 254 or the cathode plate 251 in the thickness direction, a long side L1 may be perpendicular to or may intersect a straight line L3 extending to be parallel to the stacking direction (e.g., Z-direction) of the at least one anode plate 254 and the at least one cathode plate 251.

In a preferred embodiment, in the first open region 131 and the second open region 141, an outer line OL may include a plurality of straight lines in a cross-section (e.g., the Y-Z plane) of the anode plate 254 or the cathode plate 251 in the thickness direction.

For example, the outer line OL of the first open region 131 and the second open region 141 in the cross-section (e.g., the Y-Z plane) of the anode plate 254 or the cathode plate 251 in thickness direction may be a rectangle. Among the plurality of sides or corners forming the rectangle, relatively long sides L1 may be disposed to be perpendicular to a straight line extending to be parallel to the stacking direction of the anode plate 254 and the cathode plate 251. Accordingly, short sides L2 may be disposed to be parallel to a straight line extending to be parallel to the stacking direction (e.g., Z-direction) of the anode plate 254 and the cathode plate 251.

In a preferred embodiment, a width of the battery cell 100 of the first open region 131 and the second open region 141 in the thickness direction (e.g., Y-direction), i.e., a length of the long side L1, may have a value greater than a width of the anode non-coated region 255 and a width of the cathode non-coated region 252 in the Y-direction. Accordingly, the anode non-coated region 255 and the cathode non-coated region 252 may be easily drawn out to the first open region 131 and the second open region 141.

Additionally, in a preferred embodiment, a width of the battery cell 100 of the first open region 131 and the second open region 141 in the height direction (e.g., Z-direction), that is, a length of the short side L2, may be determined within a range in which at least a partial region of the entire plurality of cathode non-coated regions 252 and at least a partial region of the entire plurality of anode non-coated regions 255 may be welded to the first current collecting member 130 and the second current collecting member 140.

For example, a bent region VA of the plurality of cathode non-coated regions 252 and a bent region VA of the plurality of anode non-coated regions 255 may overlap the first current collecting member 130 and the second current collecting member 140 in the width direction (e.g., X-direction) of the battery cell 100. Additionally, a welding line W1 may be formed in a region in which the bent region VA of the plurality of cathode non-coated regions 252 and the bent region VA of the plurality of anode non-coated regions 255 overlap the first current collector 130 and the second current collector 140 in the width direction (e.g., X-direction) of the battery cell 100.

Additionally, in a preferred embodiment, at least a partial region of each of the plurality of anode non-coated regions 255 may be welded to the second current collector 140, and at least a partial region of each of the plurality of cathode non-coated regions 252 may be welded to the first current collector 130. Accordingly, the electrode assembly 250 and the first current collector 130 and the second current collector 140 may be electrically connected to each other.

FIG. 8 schematically illustrates a connection state of a current collector and an electrode assembly 250 based on another preferred embodiment of the present disclosure.

As shown in FIG. 8, in a preferred embodiment of the present disclosure, the first open region 131 and the second open region 141 may be notches formed in the first current collector 130 and the second current collector 140.

A plurality of anode non-coated regions 255 and a plurality of cathode non-coated regions 252 may pass through the first open region 131 and the second open region 141 in the form of notches, ends E of the plurality of cathode non-coated regions 252 and ends E of the plurality of anode non-coated regions 255 may be bent in a direction oriented toward the first current collector 130 and the second current collector 140.

Additionally, the bent region in the plurality of cathode non-coated regions 252 and the bent region in the plurality of anode non-coated regions 255 may be welded to the first collector member 130 and the second collector member 140. In this case, the bent region may include ends E of the plurality of cathode non-coated regions 252 and ends E of the plurality of anode non-coated regions 255, and the ends E of the plurality of cathode non-coated regions 252 and the ends E of the plurality of anode non-coated regions 255 may also be welded to the first collector member 130 and the second collector member 140.

In a preferred embodiment, the welding may be laser welding, but a welding method is not necessarily limited by the present disclosure.

Hereinafter, a bending direction, a welding direction, and the like, of the cathode non-coated region 252 and the anode non-coated region 255 will be described with reference to FIGS. 5 to 8.

In a preferred embodiment, the ends E of the plurality of cathode non-coated regions 252 and the ends E of the plurality of anode non-coated regions 255 may be bent in a direction oriented toward the first current collecting member 130 and the second current collecting member 140, and the ends E of the plurality of cathode non-coated regions 252 and the ends E of the plurality of anode non-coated regions 255 may extend in a direction that is parallel to the direction (e.g., Z-direction) in which the plurality of cathode plates 251 and the plurality of anode plates 254 are stacked.

For example, in the first current collecting member 130, the plurality of cathode non-coated regions 252 of the first electrode assembly 250a may be drawn out to one of the first open regions 131, and then the ends E of the plurality of cathode non-coated regions 252 may be bent in the first direction.

In the cross-section (e.g., the X-Z plane) of the battery cell 100 in the thickness direction, the bent region VA of the plurality of cathode non-coated regions 252 may be perpendicular to the cathode active material region 253 of the cathode plate 251 or may intersect the cathode active material region 253. In this case, the end E of the cathode non-coated region 252 may be bent or folded by rotating the end E thereof by 90° while being parallel to the cathode active material region 253. That is, the cathode non-coated region 252 may be bent by rotating the end E of the cathode non-coated region 252 by 90° in a direction oriented toward the Z axis in the X-Y plane. This may be applied to the anode non-coated region 255 in the same principle.

In a preferred embodiment, a plurality of cathode non-coated regions 252 drawn out to one first open region 131 and a plurality of cathode non-coated regions 252 drawn out to another first open region 131 may be bent in different directions. Additionally, a plurality of anode non-coated regions 255 drawn out to one second open region 141 and a plurality of anode non-coated regions 255 drawn out to another second open region 141 may be bent in different directions. For example, when the plurality of cathode non-coated regions 252 drawn out to one first open region 131 and the plurality of cathode non-coated regions 252 drawn out to another first open region 131 are bent in a direction that brings the non-coated regions 252 and the cathode non-coated regions 252 closer to each other, the plurality of cathode non-coated regions 252 drawn out to one first open region 131 and the plurality of cathode non-coated regions 252 drawn out to another first open region 131 may be bent in different directions or opposite directions. This may be applied to a plurality of second open regions 141 with the same principle.

As an example, as shown in FIGS. 7 and 8, ends E of a plurality of cathode non-coated regions 252 drawn out from one first current collecting member 130 to one first open region 131 and ends E of another plurality of cathode non-coated regions 252 drawn out to another first open region 131 may be bent in a direction that brings the ends E of the plurality of cathode non-coated regions 252 and the ends E of another plurality of cathode non-coated regions 252 closer to each other.

For example, ends E of a plurality of cathode non-coated regions 252 drawn out from one first current collecting member 130 to one first open region 131 and ends E of another plurality of cathode non-coated regions 252 drawn out to another first open region 131 may be bent in a direction that brings the ends E of the plurality of cathode non-coated regions 252 and the ends E of another plurality of cathode non-coated regions 252 closer to each other while being spaced apart from each other with a Y-axis interposed therebetween.

Accordingly, the ends E of a plurality of cathode non-coated regions 252 drawn out to one of the first open regions 131 may be bent in the -Z-direction, and the ends E of another plurality of cathode non-coated regions 252 drawn out to another first open region 131 may be bent in the +Z-direction.

In the case of FIG. 5, ends E of a plurality of cathode non-coated regions 252 drawn out from the first current collecting member 130 to one of the first open regions 131 and ends E of another plurality of cathode non-coated regions 252 drawn out to another first open region 131 may be bent in a direction that brings the ends E of the plurality of cathode non-coated regions 252 and the ends E of another plurality of cathode non-coated regions 252 closer to each other while being spaced apart from each other with a Z-axis interposed therebetween.

Accordingly, a width of the battery cell 100 of the first current collecting member 130 in the thickness direction (e.g., Y-direction) may be prevented from increasing excessively. The above-described matters may be applied to the second current collector member 140 in the same principle.

That is, ends of a plurality of anode non-coated regions 255 drawn out from the second current collector member 140 to one second open region 141 and ends of another plurality of anode non-coated regions 255 drawn out to another second open region 141 may be bent in a direction that brings the ends of the plurality of anode non-coated regions 255 and the ends of another plurality of anode non-coated regions 255 closer to each other.

In a preferred embodiment, at least one cathode non-coated region 252 may be welded to the first current collector member 130, and at least one anode non-coated region 255 may be welded to the second current collector member 140. In this case, a welding line W1 formed in the at least one cathode non-coated region 252 may be parallel to a direction in which the at least one anode plate 254 and the at least one cathode plate 251 are stacked, and a welding line W1 formed in the at least one anode non-coated region 255 may be parallel to a direction in which the at least one anode plate 254 and the at least one cathode plate 251 are stacked.

In the case of FIG. 5, at least one anode plate 254 and at least one cathode plate 251 may be stacked in the Y-direction, and the welding line W1 may be parallel to the Y-direction.

In the case of FIGS. 7 and 8, at least one anode plate 254 and at least one cathode plate 251 may be stacked in the Z-direction, and the welding line W1 may be parallel to the Z-direction.

As shown in FIGS. 7 and 8, in a preferred embodiment, the end E of the cathode non-coated region 252 in the cross-section (e.g., the Y-Z plane) of the battery cell 100 in thickness direction may extend in a direction that is parallel to the height direction (e.g., Z-direction) of the battery cell 100. The same applies when the cathode non-coated region 252 is provided in plural. Accordingly, a direction in which the end E of the cathode non-coated region 252 extends is a direction that is parallel to the height direction (e.g., Z-direction) of the battery cell 100, and the welding line W1 formed in the cathode non-coated region 252 may also be parallel to a direction in which the end of the cathode non-coated region 252 extends, and the height direction of the battery cell 100.

When a plurality of cathode non-coated regions 252 are provided, the welding line W1 may be formed in all of the plurality of cathode non-coated regions 252. The welding may be laser welding. When the cathode non-coated region 252 is melted and solidified, the cathode non-coated region 252 may be connected, fixed, or fused to the first current collecting member 130. This may be applied to the anode non-coated region 255 and the second current collecting member 140 with the same principle.

Accordingly, the plurality of cathode non-coated regions 252 may be connected to the first current collecting member 130, and the plurality of anode non-coated regions 255 may be connected to the second current collecting member 140.

For example, the welding line W1 formed in the plurality of cathode non-coated regions 252 may be a welding bead, and a straight line connecting the welding bead or extending the welding bead in the height direction (e.g., Z-direction) of the battery cell 100 may be a welding line W1.

In the case of FIG. 5, the straight line extending the welding bead in the thickness direction (e.g., Y-direction) of the battery cell 100 may be a welding line W1.

In this manner, the first current collecting member 130 and the second current collecting member 140 may easily connect the cathode non-coated region 252 and the first terminal 121, and may connect the anode non-coated region 255 and the second terminal 122 in the case in which the cathode non-coated region 252 and the first terminal 121 are disposed vertically to each other, and in the case in which the anode non-coated region 255 and the second terminal 122 are disposed vertically to each other. At this time, unnecessary volume increase of the battery cell 100 may be prevented.

Additionally, a direction of bending at least one cathode region 252 and at least one anode region 255 may be determined depending on a direction of stacking at least one cathode plate 251 and at least one anode plate 254.

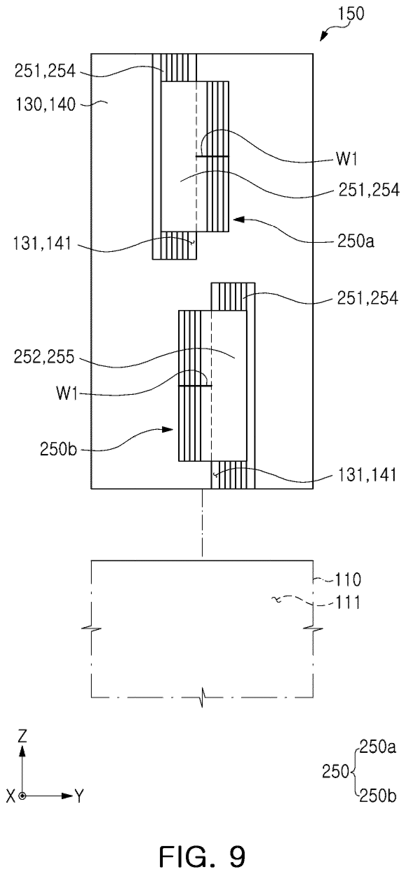

FIG. 9 schematically illustrates a connection state of a current collector and an electrode assembly 250 based on another preferred embodiment of the present disclosure.

In FIG. 9, a direction in which a cathode plate 251 and an anode plate 254 are stacked is identical to a direction in which the cathode plate 251 and the anode plate 254 are stacked in FIG. 5. In FIG. 9, a first open region 131 and a second open region 141 are illustrated as notches.

As shown in FIG. 9, at least one cathode non-coated region 252 and at least one anode non-coated region 255 may be bent in the direction in which at least one cathode plate 251 and at least one anode plate 254 are stacked.

Accordingly, when the cathode plate 251 and the anode plate 254 are stacked so that wide surfaces of the cathode plate 251 and the anode plate 254 are parallel to a side surface of the case 110 or a side surface (e.g., the X-Z plane) of the battery cell 100, a welding line W1 formed in at least one cathode non-coated region 252 and at least one anode non-coated region 255 may be parallel to the thickness direction (e.g., Y-direction) of the battery cell 100 or the thickness direction of the case 110.

On the other hand, as shown in FIGS. 7 and 8, when the cathode plate 251 and the anode plate 254 are stacked so that wide surfaces of the cathode plate 251 and the anode plate 254 are parallel to a bottom surface of the case 110 or a bottom surface of the battery cell 100, a welding line W1 formed in the cathode non-welded region 252 and the anode non-welded region 255 may be parallel to a height direction (e.g., Z-direction) of the battery cell 100 or a height direction of the case 110.

On the other hand, as another aspect, the present disclosure provides a manufacturing apparatus 300 of a battery cell.

The battery cell 100 may be a battery cell 100 according to at least a preferred embodiment of the above-described embodiments. Alternatively, the battery cell 100 may be a battery cell 100 formed by combining the above-described embodiments. Alternatively, the battery cell 100 may be another battery cell.

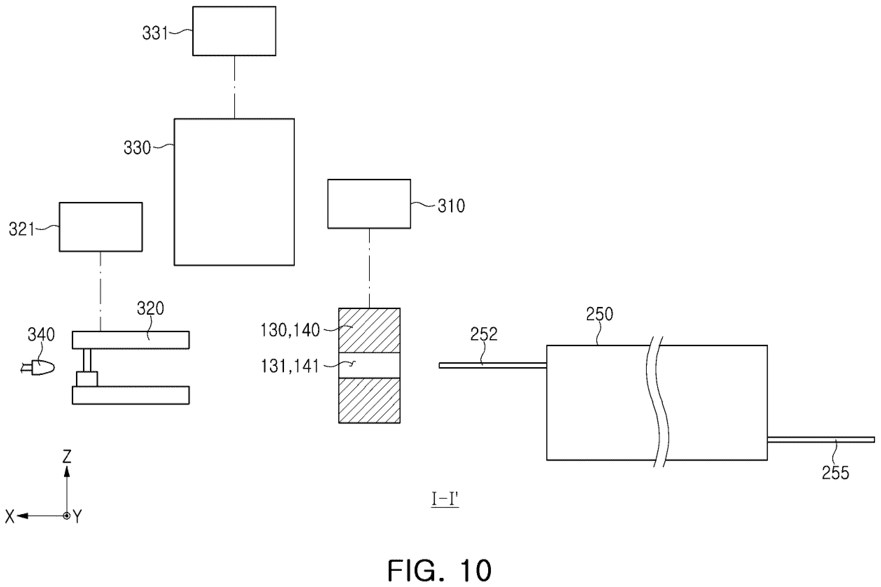

FIG. 10 schematically illustrates a manufacturing apparatus 300 of a battery cell according to a preferred embodiment of the present disclosure. In FIG. 10, a cathode non-coated region 252 and an anode non-coated region 255 are illustrated as being provided in singular, but the cathode non-coated region 252 and the anode non-coated region 255 may be provided in plural. Additionally, in FIG. 10, the cathode non-coated region 252 and the first current collecting member 130 are illustrated along line I-I' of FIG. 5.

As shown in FIG. 10, in a preferred embodiment of the present disclosure, provided is a manufacturing apparatus 300 of a battery cell including an electrode assembling body assembly 150 including at least one electrode assembly 250 including at least one anode plate 254 and at least one cathode plate 251, a first current collecting member 130 including a first open region 131 in which at least one cathode non-coated region 252 to which an active material is not applied is drawn out from the at least one cathode plate 251 and that is connected to a first terminal 121 of a cap plate 120, and a second current collecting member 140 including a second open region 141 in which at least one anode non-coated region 255 to which the active material is not applied is drawn out from the at least one anode plate 254 and which connected to a second terminal 122 of the cap plate 120, and the manufacturing apparatus 300 includes a moving member 310 moving the current collector 130 and the second current collector 140, a gripper member 320 gripping the at least one cathode non-coated region 252 and the at least one anode non-coated region 255, a mask member 330 pressurizing and bending the at least one cathode non-coated region 252 and the at least one anode non-coated region 255, and a welding member 340 welding the at least one cathode non-coated region 252 and the at least one anode non-coated region 255 to the first current collector 130 and the second current collector 140.

The moving member 310 may move the first current collector 130 and the second current collector 140 in at least one direction. The moving member 310 may be comprised of combinations of a motor, gear, beam, and the like, or may be a cylinder 325 operating hydraulically or pneumatically.

Additionally, the moving member 310 may be a linear motion structure. The linear motion structure may include at least one of a linear bearing, a linear guide, a ball screw, a linear actuator, a linear motor or a linear slide.

Additionally, the moving member 310 may be a robot arm. Additionally, the moving member 310 may be formed by combinations of various mechanisms utilizing Computer Aided Engineering (CAE). The type of the moving member 310 is not necessarily limited by the present disclosure.

The moving member 310 may be connected to a controller, or the like, and may be automatically controlled.

The moving member 310 may move the first current collecting member 130 and the second current collecting member 140 to a periphery of the electrode assembly 250. For example, the moving member 310 may move the first current collecting member 130 and the second current collecting member 140 to peripheries of the cathode non-coated region 252 and the anode non-coated region 255.

Additionally, the moving member 310 may move the first current collecting member 130 and the second current collecting member 140 so that the first open region 131 and the second open region 141 face the cathode non-coated region 252 and the anode non-coated region 255.

The moving member 310 may be provided in plural. Additionally, the moving member 310 may move the first collector member 130 and the second collector member 140 simultaneously or sequentially.

For example, in the case in which one moving member 310 is provided, after completing a task of welding the cathode non-coated region 252 to the first collector member 130, the moving member 310 may move to a periphery of the anode non-coated region 255 and continue the task of welding the anode non-coated region 255 to the second collector member 140. Alternatively, the welding task may be performed simultaneously. In this case, the electrode assembly 250 may be fixed and supported by another fixing means.

The gripper member 320 may be moved in a direction oriented toward the cathode non-coated region 252 and the anode non-coated region 255. In a preferred embodiment, a gripper driving member 321 for moving the gripper member 320 may be provided. The gripper driving member 321 may be a linear motion structure. The linear motion structure may include at least one of a linear bearing, a linear guide, a ball screw, a linear actuator, a linear motor or a linear slide.

Additionally, the gripper driving member 321 may be a robot arm. Additionally, the gripper driving member 321 may be formed by combinations of various mechanisms utilizing Computer Aided Engineering (CAE). The type of the gripper driving member 321 is not limited by the present disclosure.

The gripper member 320 may grip the cathode non-coated region 252 and the anode non-coated region 255 by passing through the first open region 131 and the second open region 141. Then, the first current collecting member 130 and the second current collecting member 140 may be further moved in a direction oriented toward the electrode assembly 250. In this case, the cathode non-coated region 252 and the anode non-coated region may can penetrate through or pass through the first open region 131 and the second open region 141 by the gripper member 320.

In FIG. 10, the first current collecting member 130 may be connected to the cathode non-coated region 252, and the second current collecting member 140 may be connected to the anode non-coated region 255. In the case in which the current collector shown in FIG. 10 is the second current collector 140, the moving member 310 may move the second current collector 140 to a periphery of the anode non-coated region 255 or in a direction oriented toward the anode non-coated region 255.

The anode non-coated region 255 may be bent by bending through the second open region 141 and then coupled to the second current collector 140. In this case, the second current collector 140 may be moved in the direction oriented toward the anode non-coated region 255, and the electrode assembly 250 may be moved in a direction oriented toward the second current collector 140. The electrode assembly 250 may be moved by a separate actuator. The above-described content may be applied to the first current collector 130, the cathode non-coated region 252, and the first open region 131 in the same principle. That is, when the current collector shown in FIG. 10 is the first current collector 130, the moving member 310 may move the first current collector 130 to a periphery of the cathode non-coated region 252 or in the direction oriented toward the cathode non-coated region 252.

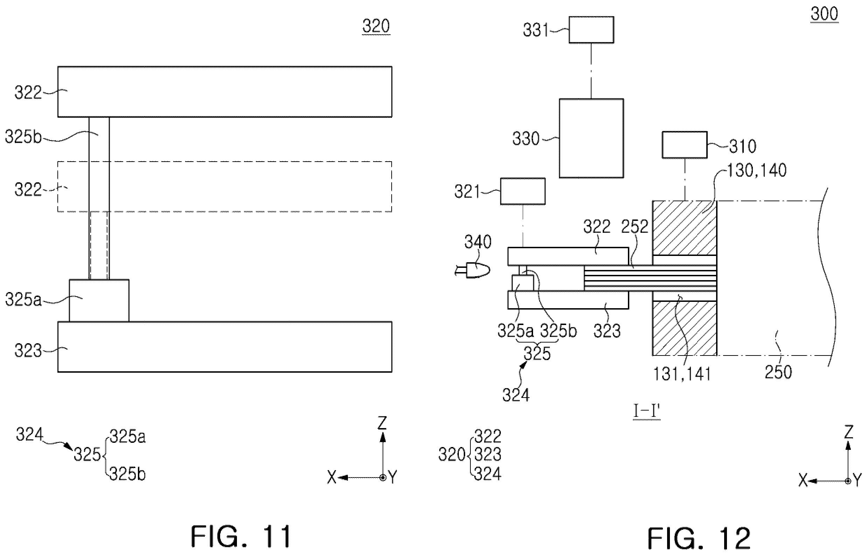

FIG. 11 is a schematic diagram of the operating state of a gripper member 320 based on a preferred embodiment of the present disclosure. As shown in FIGS. 10 and 11, in a preferred embodiment of the present disclosure, the gripper member 320 may include a first gripper arm 322 facing one surface of the at least one cathode non-coated region 252 and one surface of the at least one anode non-coated region 255, a second gripper arm 323 spaced apart from the first gripper arm 322 in a thickness direction of the at least one cathode non-coated region 252, and a gap adjustment actuator 324 connected to the first gripper arm 322 and the second gripper arm 323 and moving at least one of the first gripper arm 322 or the second gripper arm 323.

At least one cathode non-coated region 252 and at least one anode non-coated region 255 may be disposed between the first gripper arm 322 and the second gripper arm 323. In this case, one gripper member 320 may grip only at least one cathode non-coated region 252 at a specific time, and may grip only at least one anode non-coated region 255 at another time.

That is, in order to connect the first current collector member 130 to at least one cathode non-coated region 252, the gripper member 320 may grip only at least one cathode non-coated region 252. Additionally, in order to connect the second current collector member 140 to at least one anode non-coated region 255, the gripper member 320 may grip only at least one anode non-coated region 255. In other words, one gripper member 320 does not grip by mixing the cathode non-coated region 252 and the anode non-coated region 255.

In a preferred embodiment, the gap adjustment actuator 324 may be a cylinder 325. The cylinder 325 may be a hydraulic or pneumatic cylinder 325, but the type is not necessarily limited by the present disclosure.

For example, a body 325a of the cylinder 325 may be fixed to the second gripper arm 323, and a piston rod 325b may extend in a direction oriented toward the first gripper arm 322 and may be fixed to the first gripper arm 322. Accordingly, a gap between the first gripper arm 322 and the second gripper arm 323 may change depending on an extension or a contraction of the piston rod 325b.

In a preferred embodiment, a task of supplying hydraulic or pneumatic pressure to the cylinder 325 may be automatically performed as an operation by a controller, or may be performed manually by an operator directly controlling a hydraulic valve or pneumatic valve. For example, the controller may include at least one of a microcontroller or a microcontroller unit and a Programmable Logic Controller (PLC).

The first gripper arm 322 and the second gripper arm 323 may be in close contact with at least one cathode non-coated region 252 and at least one anode non-coated region 252. According to the gripper member 320, even when the cathode non-coated region 252 and the anode non-coated region 255 are provided in plural, a pre-welding or ultrasonic welding process for welding the cathode non-coated regions 252 and the anode non-coated regions becomes unnecessary.

FIG. 12 schematically illustrates a manufacturing apparatus 300 of a battery cell based on another preferred embodiment of the present disclosure. In FIG. 12, a cathode non-coated region 252 and an anode non-coated region 255 are illustrated as being provided in plural. Additionally, in FIG. 12, the plurality of cathode non-coated regions 252 and the first current collecting member 130 are illustrated along line I-I' of FIG. 5.

In FIG. 12, a gripper member 320 is illustrated gripping the cathode non-coated region 252, but the gripper member 320 may move in the direction oriented toward the anode non-coated region 255 (see FIG. 10) to grip the anode non-coated region 255 (see FIG. 10) as well. In this case, the anode non-coated region 255 (see FIG. 10) may be in a state of passing through the second open region 141 of the second current collecting member 140.

As shown in FIG. 12, in the case in which the cathode non-coated region 252 and the anode non-coated region 255 are provided in plural, the gripper member 320 may be moved to be suitable for an entire thickness of the plurality of cathode non-coated regions 252 and the plurality of anode non-coated regions 255. That is, the first gripper arm 322 may be moved so that the plurality of cathode non-coated regions 252 and the plurality of anode non-coated regions 255 may be gripped and fixed by the gripper member 320. In this case, the gripper member 320 may grip a region including ends of the plurality of cathode non-coated regions 252 and ends of the plurality of anode non-coated regions 255.

In this case, the ends of the plurality of cathode non-coated regions 252 and the ends of the plurality of anode non-coated regions 255 may be exposed to the outside of the first open region 131 and the second open region 141. This may be performed by allowing the moving member 310 to move the first current collecting member 130 and the second current collecting member 140.

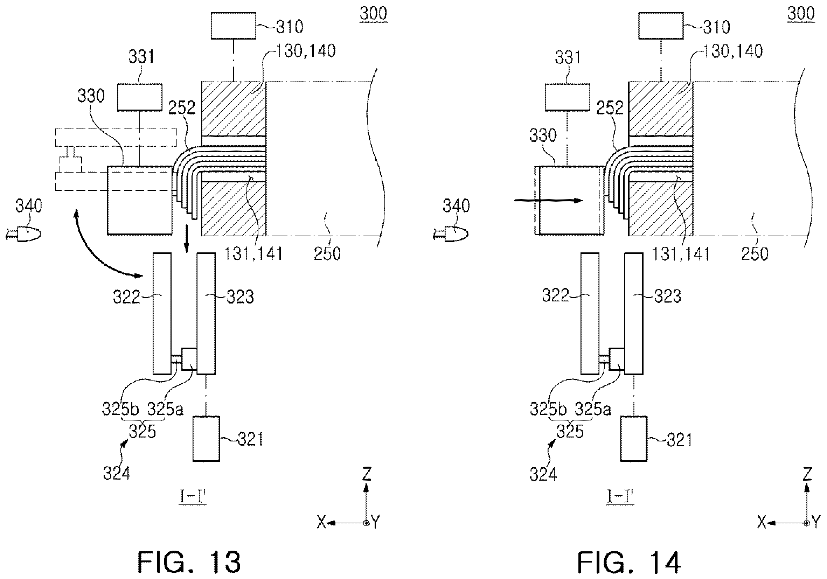

FIG. 13 is a schematic operation state diagram of the manufacturing apparatus 300 of a battery cell of FIG. 12. In FIG. 13, the cathode non-coated region 252 is illustrated in a bent state, but the anode non-coated region 255 (see FIG. 10) may also be bent by the mask member 330 by passing through the second open region 141 of the second current collecting member 140 in the same principle. The following description may also be applied to the anode non-coated region 255 (see FIG. 10) in the same principle.

In FIG. 13, a plurality of cathode non-coated regions 252 and a first current collecting member 130 are illustrated along line I-I' of FIG. 5.

As shown in FIG. 13, the mask member 330 may descend while the gripper member 320 fixes a plurality of cathode non-coated regions 252 and a plurality of anode non-coated regions 255. In a preferred embodiment, the mask member 330 may be formed of a material having electrical insulation.

Additionally, as an example, the mask member 330 may be formed of a material including beryllium copper. The beryllium copper may be an alloy of copper (Cu) and beryllium (Be).

In a preferred embodiment, a pad formed of a material including a polymer may be provided in a region in which the mask member 330 is in contact with the cathode non-coated region 252 and the anode non-coated region 255. Accordingly, it may be possible to prevent scratches, cracks, and the like, from occurring in the electrode assembly 250 due to the mask member 330. The above-described pad may be provided to be detachably attached to the mask member 330.

The mask member 330 may be disposed in an upper portion of the electrode assembly 250. Additionally, the mask member 330 may be provided to have a certain level of rigidity. Additionally, another mask driving member 331 moving the mask member 330 may be provided. Various structures that may move the mask member 330 may applied to the mask driving member 331.

The mask driving member 331 may be provided in the same type as the gripper driving member 321 described above, but the type thereof is not necessarily limited by the present disclosure.

The mask member 330 may pressurize the cathode non-coated region 252 and the anode non-coated region 255 while descending from the upper portion of the electrode assembly 250. In this case, the cathode non-coated region 252 and the anode non-coated region 255 may be bent.

In this case, the gripper member 320 may rotate in the direction oriented toward the electrode assembly 250 while fixing the ends of the cathode non-coated region 252 and the anode non-coated region 255. In this case, it may be possible to prevent a plurality of bending points from occurring in the cathode non-coated region 252 and the anode non-coated region 255. That is, while the mask member 330 is lowered and bends the cathode non-coated region 252 and the anode non-coated region 255, the gripper member 320 may rotate 90° counterclockwise in a state of gripping the ends of the cathode non-coated region 252 and the anode non-coated region 255. Accordingly, it may be possible to prevent the cathode non-coated region 252 and the anode non-coated region 255 from being bent in multiple directions or a plurality of directions.

However, the gripper member 320 may rotate in the direction in which the cathode non-coated region 252 and the anode non-coated region 255 are bent. Additionally, in some cases, the gripper member 320 may release the fixation of the cathode non-coated region 252 and the anode non-coated region 255 after a certain point in time so as not to interfere with the first current collecting member 130 and the second current collecting member 140. For example, when the cathode non-coated region 252 and the anode non-coated region 255 are folded or bent, the gripper member 320 may not fix the cathode non-coated region 252 and the anode non-coated region 255.

That is, while the mask member 330 is lowered and the cathode non-coated region 252 and the anode non-coated region 255 are folded, the gripper member 320 may not grip the end of the cathode non-coated region 252 and the end of the anode non-coated region 255. In this manner, when the cathode non-coated region 252 and the anode non-coated region 255 are folded or bent, whether the gripper member 320 fixes the cathode non-coated region 252 and the anode non-coated region 255 is not necessarily limited by the present disclosure. In this case, the gripper member 320 may insert the cathode non-coated region 252 and the anode non-coated region 255 into the first open region 131 and the second open region 141, and may be retreated in a direction away from the cathode non-coated region 252 and the anode non-coated region 255 before the cathode non-coated region 252 and the anode non-coated region 255 are bent. Then, the mask member 330 may descend and may simultaneously bend the cathode non-coated region 252 and the anode non-coated region 255.

FIG. 14 is a schematic diagram of an operating state of the manufacturing apparatus 300 of a battery cell of FIGS. 12 and 13. In FIG. 14, a plurality of cathode non-coated regions 252 and a first current collector member 130 are illustrated along line I-I' of FIG. 5. In FIG. 14, the cathode non-coated region 252 is illustrated as being bent and pressurized, but the anode non-coated region 255 (see FIG. 10) may also be bent and pressurized by the mask member 330 by passing through the second open region 141 of the second current collector member 140 in the same principle. The following description may also be applied to the anode non-coated region 255 (see FIG. 10) in the same principle.

As shown in FIG. 14, the mask member 330 may be moved in a direction oriented toward the first current collector member 130 and the cathode non-coated region 252.

The mask member 330 may pressurize the cathode non-coated region 252 by moving in a direction, intersecting a direction (e.g., -Z-direction) in which the mask member 330 descends, or a direction (e.g., -X-direction) perpendicular thereto. Accordingly, the bent cathode non-coated region 252 may be in close contact with the first current collector member 130. Accordingly, the welding quality may be improved.

The mask member 330 may also pressurize the anode non-coated region 255 (see FIG. 10) in a direction oriented toward the second current collector member 140 (see FIG. 10). Accordingly, the anode non-coated region 255 (see FIG. 10) may be in close contact with the second current collector member 140 (see FIG. 10).

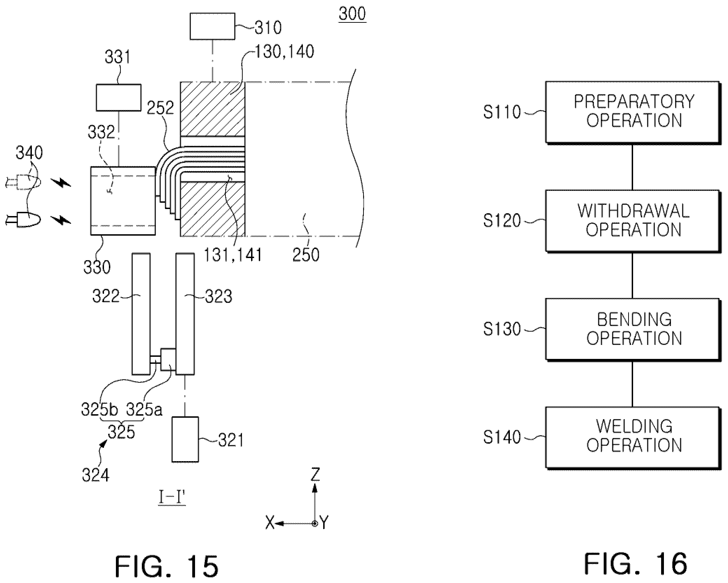

FIG. 15 is a schematic operation state diagram of the manufacturing apparatus 300 of a battery cell of FIGS. 12 to 14. In FIG. 15, a plurality of cathode non-coated regions 252 and a first current collector member 130 are illustrated along line I-I' of FIG. 5. In FIG. 15, a state in which a cathode non-coated region 252 is welded to a first current collector member 130 is illustrated, but the anode non-coated region 255 (see FIG. 10) may also be welded to a second current collector member 140 in the same principle. The following description may also be applied to the anode non-coated region 255 (see FIG. 10) in the same principle.

As shown in FIG. 15, a mask member 330 may descend to ends of a plurality of cathode non-coated regions 252 and a plurality of anode non-coated regions 255 to bend the ends of the plurality of cathode non-coated regions 252 and the ends of the plurality of anode non-coated regions 255.

Then, the mask member 330 may move in a direction, perpendicular to a descending direction (e.g., -Z-direction), i.e., in a direction oriented toward the electrode assembly 250, as shown in FIG. 14, and may thus pressurize the plurality of cathode non-coated regions 252 and the plurality of anode non-coated regions 255 that have been bent in a direction oriented toward the electrode assembly 250. A direction in which the mask member 330 moves in a direction, perpendicular to the descending direction (e.g., -Z-direction), may be a pressurizing direction. Additionally, the descending direction (e.g., - Z-direction) of the mask member 330 may be a moving direction of the mask member 330.

Accordingly, before the plurality of cathode non-coated regions 252 and the plurality of anode non-coated regions 255 are welded, the plurality of cathode non-coated regions 252 and the plurality of anode non-coated regions 255 may be in closer contact with to the first current collector member 130 and the second current collector member 140. This may contribute to improving the welding quality. The movement of the mask member 330 may be performed by the mask driving member 331.

In a preferred embodiment of the present disclosure, the welding member 340 may be welded in the moving direction (e.g., -Z-direction) of the mask member 330. That is, the welding member 340 may be welded in a direction that is parallel to the moving direction (e.g., -Z-direction) or the descending direction (e.g., -Z-direction) of the mask member 330. Accordingly, a welding line W1 or a welding bead formed in at least one cathode non-coated region 252 and at least one anode non-coated region 255 may be parallel to the descending direction of the mask member 330. This may contribute to improving task efficiency.

Additionally, when the cathode non-coated region 252 and the anode non-coated region 255 are provided in plural, the welding member 340 may melt all of the plurality of cathode non-coated regions 252 and the plurality of anode non-coated regions 255 and may weld the melted regions to the first current collector 130 and the second current collector 140.

In a preferred embodiment, the welding member 340 may be a welding head of a laser welding device, but the type of the welding member 340 is not necessarily limited by the present disclosure.

In a preferred embodiment, when the welding member 340 is a welding head of a laser welding device, the welding member 340 may be a gun type or a scanner type.

In a preferred embodiment, the mask member 330 may include a through-hole 332 that serves as a passage through which a welding heat source provided by the welding member 340 moves to the at least one cathode non-coated region 252 and the at least one anode non-coated region 255. The welding heat source of the welding member 340 may be a laser beam.

Additionally, in a preferred embodiment, the welding member 340 may provide a welding heat source to the at least one cathode non-coated region 252 and the at least one anode non-coated region 255. The at least one cathode non-coated region 252 and the at least one anode non-coated region 255 may face the welding member 340 with the mask member 330 interposed therebetween.

In this case, the welding member 340 may provide a welding heat source in a position that does not overlap the first open region 131 and the second open region 141. That is, the welding member 340 may provide the welding heat source toward the at least one anode non-coated region 255 and the at least one cathode non-coated region 252 in the position that does not overlap the first open region 131 and the second open region 141 in a width direction (e.g., X-direction) of the battery cell 100. Accordingly, the cathode active material region 253 and the anode active material region 256 may be prevented from being thermally damaged by the welding member 340.

In this manner, in a preferred embodiment of the present disclosure, the cathode active material region 253 and the anode active material region 256 may not face the welding member 340. Accordingly, even when the cathode non-coated region 252 and the anode non-coated region 255 are welded to the first current collecting member 130 and the second current collecting member 140 with a relatively high heat input, the damage to the cathode active material region 253 and the anode active material region 256 may be minimized or prevented.

On the other hand, the present disclosure as another aspect provides a manufacturing method of a battery cell 100.

The battery cell 100 may be a battery cell 100 according to at least a preferred embodiment of the above-described embodiments. Alternatively, the battery cell 100 may be a battery cell 100 formed by combining the above-described embodiments. Alternatively, the battery cell 100 may be another battery cell.

FIG. 16 schematically illustrates a manufacturing method of a battery cell based on a preferred embodiment of the present disclosure.

As shown in FIGS. 1 to 16, in a preferred embodiment of the present disclosure, provided is a manufacturing method of a battery cell 100, including a preparatory operation (S110) of preparing at least one electrode assembly 250 that includes at least one anode plate 254 and at least one cathode plate 251, a first current collecting member 130 that includes a first open region 131 in which at least one cathode non-coated region 252 to which an active material is not applied is drawn out from the at least one cathode plate 251 and that is connected to a first terminal 121 of a cap plate 120, and a second current collecting member 140 including a second open region 141 in which at least one anode non-coated region 255 to which the active material is not applied is drawn out from the at least one anode plate 254 and that is connected to a second terminal 122 of the cap plate 120, an withdrawal operation (S120) of withdrawing the at least one cathode non-coated region 252 to the first open region 131 and withdrawing the at least one anode non-coated region 255 to the second open region 141, a bending operation (S130) of bending the at least one cathode non-coated region 252 and bending the at least one anode non-coated region 255, and a welding operation (S140) of welding the at least one cathode non-coated region 252 to the first current collecting member 130 and welding the at least one anode non-coated region 255 to the second current collecting member 140.

The withdrawal operation (S120) may be performed by moving the first current collecting member 130 and the second current collecting member 140 toward the cathode non-coated region 252 and the anode non-coated region 255. However, the opposite case may also be possible.

After the withdrawal operation (S120) is completed, the bending operation (S130) may be performed in which the cathode non-coated region 252 and the anode non-coated region 255 are pressurized through the mask member 330, the cathode non-coated region 252 is bent in a direction oriented toward the first collector member 130, and the anode non-coated region 255 is bent in a direction oriented toward the second collector member 140.

In this case, when the cathode non-coated region 252 is bent, the cathode non-coated region 252 may be bent toward the first collector member 130, and when the anode non-coated region 255 is bent, the anode non-coated region 255 may be bent toward the second collector member 140. In the case of a plurality of cathode non-coated regions 252, the plurality of cathode non-coated regions 252 may be bent simultaneously. This may be applied to the anode non-coated region 255 in the same principle.

In a preferred embodiment, in the bending operation (S130), the at least one cathode non-coated region 252 and the at least one anode non-coated region 255 may be bent in opposite directions. Alternatively, in the bending operation (S130), the at least one cathode non-coated region 252 and the at least one anode non-coated region 255 may be bent in the same direction.

In a preferred embodiment, in the bending operation (S130), an end of at least one cathode non-coated region 252 may be bent in a direction oriented toward the first current collecting member 130, and an end of at least one anode non-coated region 255 may be bent in a direction oriented toward the second current collecting member 140. Accordingly, the end of at least one cathode non-coated region 252 and the end of at least one anode non-coated region 255 may be in close contact with the first current collecting member 130 and the second current collecting member 140, respectively.

Additionally, in a preferred embodiment, in the bending operation (S130), the at least one cathode non-coated region 252 and the at least one anode non-coated region 255 may be rotated about an axis, perpendicular to the thickness direction of the at least one anode plate 254 and the thickness direction of the at least one cathode plate 251, as a rotation axis, so that the at least one cathode non-coated region 252 and the at least one anode non-coated region 255 may be bent.

In this case, an end of the at least one cathode non-coated region 252 and an end of the at least one anode non-coated region 255 may be rotated, so that the at least one cathode non-coated region 252 and the at least one anode non-coated region 255 may be bent.

The bending operation (S130) may be performed by applying pressure to a region including the end of at least one cathode non-coated region 252 and the end of at least one anode non-coated region 255 with a mask member 330.

After the bending operation (S130) is completed, the welding operation (S140) may be performed. The welding operation (S140) may be performed by providing a welding heat source to the welding member 340. In the welding operation (S140), welding may be performed while moving the welding member 340. The welding member 340 may weld a bent region in at least one cathode non-coated region 252 and may weld a bent region in at least one anode non-coated region 255. In this case, the bent region of the cathode plate 251 may be a section from a point at which the cathode plate 251 is bent to the end of the cathode non-coated region 252.

Additionally, the bent region of the anode plate 254 may be a section from a point at which the anode plate 254 is bent to the end of the anode non-coated region 255. The welding member 340 may provide a welding heat source to at least a partial region of the bent region.

In a preferred embodiment, the welding operation (S140) may be a laser welding operation. Accordingly, ultrasonic welding, and the like, may be excluded from a manufacturing process of the battery cell 100.

Additionally, in a preferred embodiment, the welding operation (S140) may be welded in a direction that is parallel to the thickness direction of the at least one anode plate 254 and the thickness direction of the at least one cathode plate 251. Accordingly, a welding line W1 formed in the at least one cathode non-coated region 252 and the at least one anode non-coated region 255 may be parallel to the thickness direction of the at least one anode plate 254 and the thickness direction of the at least one cathode plate 251. Accordingly, the welding may be performed in the same direction as the bending direction, which may contribute to improving manufacturing efficiency.

The contents described above are merely examples of applying the principles of the present disclosure, and other components may be further included or substituted and applied without departing from the scope of the present disclosure. Additionally, the present disclosure may be implemented by deleting or changing some of the components in the above-described embodiments, and each embodiment may be implemented in combination with each other.
Aspect 1) A battery cell, comprising: a case including an accommodation space; a cap plate connected to the case and including a first terminal and a second terminal; and an electrode assembling body assembly disposed in the accommodation space and connected to the first terminal and the second terminal; wherein the electrode assembling body assembly comprises: at least one electrode assembly including at least one anode plate and at least one cathode plate; a first current collecting member that includes a first open region in which at least one cathode non-coated region to which an active material is not applied is drawn out from the at least one cathode plate, and that is connected to the first terminal; and a second current collecting member including a second open region in which at least one anode non-coated region to which the active material is not applied is drawn out from the at least one anode plate and that is connected to the second terminal, wherein the at least one cathode non-coated region is bent and is in contact with the first current collecting member, and the at least one anode non-coated region is bent and is in contact with the second current collecting member.
Aspect 2) The battery cell of aspect 1, wherein the at least one electrode assembly includes: a plurality of electrode assemblies, wherein the first current collecting member includes: a plurality of first open regions, and wherein the second current collecting member includes: a plurality of second open regions.
Aspect 3) The battery cell of aspect 2, wherein the cathode non-coated regions of the plurality of electrode assemblies are drawn out to the plurality of first open regions, and wherein the anode non-coated regions of the plurality of electrode assemblies are drawn out to the plurality of second open regions.
Aspect 4)The battery cell of aspect 3, wherein the plurality of electrode assemblies are stacked in the same direction as a stacking direction in which the at least one anode plate and the at least one cathode plate are stacked, wherein the plurality of first open regions are disposed to be offset from each other in the stacking direction, and wherein the plurality of second open regions are disposed to be offset from each other in the stacking direction.
Aspect 5) The battery cell any one of aspects 1 to 4, wherein the at least one electrode assembly includes: a plurality of electrode assemblies, wherein each of the plurality of electrode assemblies includes: a plurality of cathode plates and a plurality of anode plates, and wherein a plurality of cathode non-coated regions overlap each other and are connected to the first current collecting member, and a plurality of anode non-coated regions overlap each other and are connected to the second current collecting member.
Aspect 6) The battery cell of aspect 5, wherein ends of the plurality of cathode non-coated regions and ends of the plurality of anode non-coated regions are bent in a direction oriented toward the first current collecting member and the second current collecting member, and wherein the ends of the plurality of cathode non-coated regions and the ends of the plurality of anode non-coated regions extend in a direction that is parallel to a direction in which the plurality of cathode plates and the plurality of anode plates are stacked.
Aspect 7) The battery cell of aspect 1, wherein the first open region is a notch or a hole, and wherein the second open region is a notch or a hole.
Aspect 8)The battery cell any one of aspects 1 to 7, wherein the at least one cathode non-coated region is welded to the first current collecting member, wherein the at least one anode non-coated region is welded to the second current collecting member, and wherein a welding line formed in the at least one cathode non-coated region and a welding line formed in the at least one anode non-coated region are parallel to a direction in which the at least one anode plate and the at least one cathode plate are stacked.
Aspect 9) The battery cell of aspect 2, wherein a plurality of cathode non-coated regions drawn out to one first open region and a plurality of cathode non-coated regions drawn out to another first open region are bent in different directions, and a plurality of anode non-coated regions drawn out to one second open region and a plurality of anode non-coated regions drawn out to another second open region are bent in different directions.
Aspect 10)The battery cell of any one of aspects 1 to 8, having one or more of the following characteristics (i) to (ii), respectively alone or in combination: (i) wherein the first open region and the second open region are disposed so that a long side in a cross-section of the at least one anode plate or the at least one cathode plate in a thickness direction is disposed to be perpendicular to a straight line extending parallel to a stacking direction of the at least one anode plate and the at least one cathode plate, and/or (ii) wherein the first open region and the second open region are provided so that an outer line of the at least one anode plate or the at least one cathode plate includes a plurality of straight lines.
Aspect 11)A manufacturing apparatus of a battery cell comprising an electrode assembling body assembly including at least one electrode assembly including at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate, the manufacturing apparatus comprising: a moving member moving the first current collecting member and the second current collecting member; a gripper member gripping the at least one cathode non-coated region and the at least one anode non-coated region; a mask member pressurizing and bending the at least one cathode non-coated region and the at least one anode non-coated region; and a welding member welding the at least one cathode non-coated region and the at least one anode non-coated region to the first current collecting member and the second current collecting member.
Aspect 12)The manufacturing apparatus of a battery cell of aspect 11, having one or more of the following characteristics (i) to (iii), respectively alone or in combination: (i) wherein the gripper member includes: a first gripper arm facing one surface of the at least one cathode non-coated region and one surface of the at least one anode non-coated region; a second gripper arm spaced apart from the first gripper arm in a thickness direction of the at least one cathode non-coated region; and a gap adjustment actuator connected to the first gripper arm and the second gripper arm and moving at least one of the first gripper arm or the second gripper arm, and/or (ii) wherein the welding member welds in a moving direction of the mask member and/or (iii) wherein the welding member provides a welding heat source in a position that does not overlap the first open region and the second open region.
Aspect 13) A manufacturing method of a battery cell, comprising: a preparatory operation of preparing at least one electrode assembly that includes at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate; a withdrawal operation of withdrawing the at least one cathode non-coated region to the first open region and withdrawing the at least one anode non-coated region to the second open region; a bending operation of bending the at least one cathode non-coated region and bending the at least one anode non-coated region; and a welding operation of welding at least one cathode non-coated region to the first current collecting member and welding at least one anode non-coated region to the second current collecting member.
Aspect 14)The manufacturing method of a battery cell of aspect 13, having one or more of the following characteristics (i) to (ii), respectively alone or in combination: (i) wherein in the bending operation, an end of the at least one cathode non-coated region is bent in a direction oriented toward the first current collecting member and an end of the at least one anode non-coated region is bent in a direction oriented toward the second current collecting member, and/or (ii) wherein in the bending operation, the at least one cathode non-coated region and the at least one anode non-coated region are rotated about an axis, perpendicular to a thickness direction of the at least one anode plate and a thickness direction of the at least one cathode plate, as a rotation axis, so that the at least one cathode non-coated region and the at least one anode non-coated region are bent.
Aspect 15)The manufacturing method of a battery cell of aspect 13 or 14, having one or more of the following characteristics (i) to (ii), respectively alone or in combination: (i) wherein in the welding operation, laser welding is performed, and/or (ii) wherein in the welding operation, welding is performed in a direction that is parallel to a thickness direction of the at least one anode plate and a thickness direction of the at least one cathode plate.

## Claims

1. A battery cell, comprising:
a case including an accommodation space;
a cap plate connected to the case and including a first terminal and a second terminal; and
an electrode assembling body assembly disposed in the accommodation space and connected to the first terminal and the second terminal;
wherein the electrode assembling body assembly comprises:
at least one electrode assembly including at least one anode plate and at least one cathode plate;
a first current collecting member that includes a first open region in which at least one cathode non-coated region to which an active material is not applied is drawn out from the at least one cathode plate, and that is connected to the first terminal; and
a second current collecting member including a second open region in which at least one anode non-coated region to which the active material is not applied is drawn out from the at least one anode plate and that is connected to the second terminal,
wherein the at least one cathode non-coated region is bent and is in contact with the first current collecting member, and
the at least one anode non-coated region is bent and is in contact with the second current collecting member.

2. The battery cell of claim 1, wherein the at least one electrode assembly includes:
a plurality of electrode assemblies,
wherein the first current collecting member includes:
a plurality of first open regions, and
wherein the second current collecting member includes:
a plurality of second open regions.

3. The battery cell of claim 2, wherein the cathode non-coated regions of the plurality of electrode assemblies are drawn out to the plurality of first open regions, and
wherein the anode non-coated regions of the plurality of electrode assemblies are drawn out to the plurality of second open regions.

4. The battery cell of claim 3, wherein the plurality of electrode assemblies are stacked in the same direction as a stacking direction in which the at least one anode plate and the at least one cathode plate are stacked,
wherein the plurality of first open regions are disposed to be offset from each other in the stacking direction, and
wherein the plurality of second open regions are disposed to be offset from each other in the stacking direction.

5. The battery cell any one of claims 1 to 4, wherein the at least one electrode assembly includes:
a plurality of electrode assemblies,
wherein each of the plurality of electrode assemblies includes:
a plurality of cathode plates and a plurality of anode plates, and
wherein a plurality of cathode non-coated regions overlap each other and are connected to the first current collecting member, and
a plurality of anode non-coated regions overlap each other and are connected to the second current collecting member.

6. The battery cell of claim 5, wherein ends of the plurality of cathode non-coated regions and ends of the plurality of anode non-coated regions are bent in a direction oriented toward the first current collecting member and the second current collecting member, and
wherein the ends of the plurality of cathode non-coated regions and the ends of the plurality of anode non-coated regions extend in a direction that is parallel to a direction in which the plurality of cathode plates and the plurality of anode plates are stacked.

7. The battery cell of claim 1, wherein the first open region is a notch or a hole, and
wherein the second open region is a notch or a hole.

8. The battery cell any one of claims 1 to 7, wherein the at least one cathode non-coated region is welded to the first current collecting member,
wherein the at least one anode non-coated region is welded to the second current collecting member, and
wherein a welding line formed in the at least one cathode non-coated region and a welding line formed in the at least one anode non-coated region are parallel to a direction in which the at least one anode plate and the at least one cathode plate are stacked.

9. The battery cell of claim 2, wherein a plurality of cathode non-coated regions drawn out to one first open region and a plurality of cathode non-coated regions drawn out to another first open region are bent in different directions, and
a plurality of anode non-coated regions drawn out to one second open region and a plurality of anode non-coated regions drawn out to another second open region are bent in different directions.

10. The battery cell of any one of claims 1 to 8, having one or more of the following characteristics (i) to (ii), respectively alone or in combination:
(i) wherein the first open region and the second open region are disposed so that a long side in a cross-section of the at least one anode plate or the at least one cathode plate in a thickness direction is disposed to be perpendicular to a straight line extending parallel to a stacking direction of the at least one anode plate and the at least one cathode plate, and/or
(ii) wherein the first open region and the second open region are provided so that an outer line of the at least one anode plate or the at least one cathode plate includes a plurality of straight lines.

11. A manufacturing apparatus of a battery cell comprising an electrode assembling body assembly including at least one electrode assembly including at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate, the manufacturing apparatus comprising:
a moving member moving the first current collecting member and the second current collecting member;
a gripper member gripping the at least one cathode non-coated region and the at least one anode non-coated region;
a mask member pressurizing and bending the at least one cathode non-coated region and the at least one anode non-coated region; and
a welding member welding the at least one cathode non-coated region and the at least one anode non-coated region to the first current collecting member and the second current collecting member.

12. The manufacturing apparatus of a battery cell of claim 11, having one or more of the following characteristics (i) to (iii), respectively alone or in combination:
(i) wherein the gripper member includes:
a first gripper arm facing one surface of the at least one cathode non-coated region and one surface of the at least one anode non-coated region;
a second gripper arm spaced apart from the first gripper arm in a thickness direction of the at least one cathode non-coated region; and
a gap adjustment actuator connected to the first gripper arm and the second gripper arm and moving at least one of the first gripper arm or the second gripper arm, and/or
(ii) wherein the welding member welds in a moving direction of the mask member and/or
(iii) wherein the welding member provides a welding heat source in a position that does not overlap the first open region and the second open region.

13. A manufacturing method of a battery cell, comprising:
a preparatory operation of preparing at least one electrode assembly that includes at least one anode plate and at least one cathode plate, a first current collecting member that includes a first open region in which at least one cathode non-coated region to which an active material is not applied is drawn out from the at least one cathode plate and that is connected to a first terminal of a cap plate, and a second current collecting member including a second open region in which at least one anode non-coated region to which the active material is not applied is drawn out from the at least one anode plate and that is connected to a second terminal of the cap plate;
a withdrawal operation of withdrawing the at least one cathode non-coated region to the first open region and withdrawing the at least one anode non-coated region to the second open region;
a bending operation of bending the at least one cathode non-coated region and bending the at least one anode non-coated region; and
a welding operation of welding at least one cathode non-coated region to the first current collecting member and welding at least one anode non-coated region to the second current collecting member.

14. The manufacturing method of a battery cell of claim 13, having one or more of the following characteristics (i) to (ii), respectively alone or in combination:
(i) wherein in the bending operation,
an end of the at least one cathode non-coated region is bent in a direction oriented toward the first current collecting member and an end of the at least one anode non-coated region is bent in a direction oriented toward the second current collecting member, and/or
(ii) wherein in the bending operation,
the at least one cathode non-coated region and the at least one anode non-coated region are rotated about an axis, perpendicular to a thickness direction of the at least one anode plate and a thickness direction of the at least one cathode plate, as a rotation axis, so that the at least one cathode non-coated region and the at least one anode non-coated region are bent.

15. The manufacturing method of a battery cell of claim 13 or 14, having one or more of the following characteristics (i) to (ii), respectively alone or in combination:
(i) wherein in the welding operation, laser welding is performed, and/or
(ii) wherein in the welding operation,
welding is performed in a direction that is parallel to a thickness direction of the at least one anode plate and a thickness direction of the at least one cathode plate.
